(19) Europäisches Patentamt
European Patent Office
Office européen des brevets

(11) Publication number: 0 158 885 A1

# (12) EUROPEAN PATENT APPLICATION

(21) Application number: 85103715.0

(22) Date of filing: 28.03.85

(51) Int. Cl.[4]: C 08 G 18/63
C 08 F 291/08

(30) Priority: 29.03.84 US 594633

(43) Date of publication of application: 23.10.85 Bulletin 85/43

(84) Designated Contracting States: AT BE CH DE FR GB IT LI LU NL SE

(71) Applicant: UNION CARBIDE CORPORATION
Old Ridgebury Road
Danbury Connecticut 06817(US)

(72) Inventor: Bailey, Frederick Eugene, Jr.
848 Beaumont Road
Charleston West Virginia 25314(US)

(74) Representative: Wuesthoff, Franz, Dr.-Ing. et al,
Patentanwälte Wuesthoff -v. Pechmann-Behrens-Goetz
Schweigerstrasse 2
D-8000 München 90(DE)

## (54) Copolymer/terpolymer/polyol dispersions for preparing polyurethanes having improved combustion resistance.

(57) A stable polymer/polyol dispersion is provided, which is useful in the preparation of polyurethane foams having improved combustion resistance and which contain

(a) a polyol having a hydroxyl number from about 20 to about 150;

(b) a copolymer containing from about 0.5 weight percent to about 90 weight percent, based on the weight of the copolymer, of polymerized acrylonitrile and from about 10 weight percent to about 99.5 weight percent, based on the copolymer, of at least one other polymerized halocarbon-free monomer, wherein the copolymer is characterized by a cross-linking coefficient of less than about 55; and

(c) a terpolymer containing from about 0.5 weight percent to about 45 weight percent, based on the terpolymer, of a polymerized halocarbon monomer, from about 20 weight percent to about 50 weight percent based on the terpolymer, of polymerized acrylonitrile and from about 79.5 weight percent to about 5% weight percent, based on the terpolymer, of at least one other polymerized ethylenically unsaturated monomer;

wherein the total amount of polyol is from about 45 weight percent to about 95 weight percent, based on the total weight of the dispersion, the total amount of copolymer and terpolymer in the polyol is from about 5 weight percent to about 55 weight percent, based on the total weight of the dispersion, and the weight ratio of copolymer to terpolymer is such that the amount of aliphatic chlorine of bromine is from about 0.2 weight percent to about 18 weight percent based on the total weight of the dispersion.

EP 0 158 885 A1

0158885

ıntanwälte
ıesthoff - v. Pechmann
ırens - Goetz
veigerstraße 2
0 München 90

# COPOLYMER/TERPOLYMER/POLYOL DISPERSIONS FOR PREPARING POLYURETHANES HAVING IMPROVED COMBUSTION RESISTANCE

## FIELD OF THE INVENTION

This invention relates to polymer/polyol dispersions useful in preparing polyurethane foams and elastomers which exhibit improved combustion resistance. More particularly, this invention relates to polymer/polyol dispersions which contain a copolymer and a terpolymer that lead to improved combustion resistance in polyurethane foams prepared therefrom. This invention also relates to novel polyurethane foams and elastomers prepared from such polymer/polyol dispersions, methods of preparing the polymer/polyol dispersions and methods of preparing the polyurethane foam and elastomers.

## BACKGROUND OF THE INVENTION

The basic technology for the preparation of polymer/polol dispersions useful in producing polyurethane foams, elastomers and the like is described in U.S. Patents No. 3,304,273, 3,383,351, Re. 28,715 and Re 29,118 . Such dispersions can be produced by polymerizing one or more olefinically unsaturated monomers dissolved or dispersed in a polyol in the presence of a free radical catalyst. Polymer/polyol dispersions, when used in producing polyurethane foams and elastomers, impart higher load bearing properties to polyurethane foams and elastomers than are exhibited by such products prepared from unmodified polyols.

Many commercial molded high resilience polyurethane foams are produced from an isocyanate blend (a blend of tolylene diisocyanates and a polymeric isocyanate) and from a polymer/polyol derived from acrylonitrile and styrene. However, these foams have poor combustion resistance.

U.S. patent 4,214,055 discloses that high-resilience combustion resistant polyurethane foams can be produced from polymer/polyols wherein the polymer is comprised of a major amount of polymerized vinylidene chloride and a minor amount of acrylonitrile.

U.S. patent 4,242,476 discloses that the combustion resistance of polyurethane foams made from polymer/polyols containing acrylonitrile can be improved by copolymerizing vinylidene chloride in an amount from 5% to 45%, based on the total weight of monomers in the polymer.

EP-A1- 0095653 (hereinafter referred to as the Simroth application) discloses that polymer/polyols made from chloride-containing monomers are undesirable because of the dehydrochlorination associated with such monomers. Simroth teaches that improved combustion resistance of polyurethane foams can be obtained if the crosslinking coefficient of the polymer/polyol is kept below about 55.The reduction of the crosslinking coefficient of the polymer/polyol dispersion is accomplished by controlling a variety of process parameters such as increasing the free radical polymerization catalyst

concentration, lowering the residence time, reducing the proportion of acrylonitrile in the system and increasing the concentration of a chain transfer agent. However, it has been found that even with careful control of the above parameters, the improved combustion resistance of the polyurethane foams disclosed by Simroth often vary widely.

Accordingly, there is a need for polymer/polyol dispersions which impart greater combustion resistance to the polyurethane foams prepared therefrom without incurring the drawbacks previously encountered.

## SUMMARY OF THE INVENTION

The present invention provides a stable polymer/polyol dispersion which comprises

(a) a polyol having a hydroxyl number from 20 to 150;

(b) a copolymer containing from about 0.5 weight percent to 90 weight percent, based on the weight of the copolymer, of polymerized acrylonitrile and from 10 weight percent to 99.5 weight percent, based on the copolymer, of at least one other polymerized halocarbon-free monomer (as hereinafter defined), wherein the copolymer is characterized by a crosslinking coefficient of less than 55; and

(c) a terpolymer containing from 0.5 weight percent to 45 weight percent, based on the terpolymer, of a polymerized halocarbon monomer (as

hereinafter defined), from 20 weight percent to 50 weight percent, based on the terpolymer, of polymerized acrylonitrile and from 79.5 weight percent to 5% weight percent, based on the terpolymer, of at least one other polymerized ethylenically unsaturated monomer;

wherein the total amount of polyol in the dispersion is from 45 weight percent to 95 weight percent, based on the total weight of the dispersion, the total amount of copolymer and terpolymer in the dispersion is from 5 weight percent to 55 weight percent, based on the total weight of the dispersion, and the weight ratio of copolymer to terpolymer in the dispersion is such that the amount of chlorine or bromine attached to an aliphatic carbon atom is from 0.2 weight percent to 18 weight percent, based on the total weight of the dispersion.

"Halocarbon monomer" as used herein means any ethylenically unsaturated monomer which, when polymerized, contains at least one chlorine atom or at least one bromine atom attached to an aliphatic carbon atom.

"Halocarbon-free monomer" as used herein means an ethylenically unsaturated monomer which, when polymerized, contains no chlorine or bromine atoms attached to an aliphatic carbon atom.

This invention also provides a blend process for making such polymer/polyols, a process for using such polymer polyols to make a combustion

resistant polyurethane foam, and combustion resistant polyurethane foams produced thereby.

It has been found that the polymer/polyols of this invention have consistently improved combustion resistance.

DETAILED DESCRIPTION OF THE INVENTION

The stable polymer/polyol dispersions of this invention contain a polyol, a certain copolymer and a certain terpolymer.

Illustrative of the polyols useful in producing polymer/polyol compositions in accordance with this invention are the polyhydroxyalkanes, the polyoxyalkylene polyols, the polyoxyalkylene polyesters . Among the polyols which can be employed are those selected from one or more of the following classes of compositions, alone or in admixture, known to those skilled in the polyurethane art:

(a) alkylene oxide adducts of polyhydroxyalkanes;

(b) alkylene oxide adducts of non-reducing sugars and sugar derivatives;

(c) alkylene oxide adducts of phosphorus and polyphosphorus acids;

(d) alkylene oxide adducts of polyphenols;

(e) the polyols from natural oils such as castor oil,

Illustrative alkylene oxide adducts of polyhydroxyalkanes include, among others, the alkylene oxide adducts of ethylene glycol, propylene glycol, 1,3-dihydroxypropane, 1,4-dihydroxybutane, and 1,6-dihydroxyhexane, glycerol, 1,2,4-trihydroxybutane, 1,2,6-trihydroxyhexane, 1,1,1-trimethylolethane, 1,1,1-trimethylolpropane; pentaerthritol, polycaprolactone, xylitol, arabitol, sorbitol, mannitol, . . A preferred class of alkylene oxide adducts of polyhydroxyalkanes are the ethylene oxide and propylene oxide adducts of trihyroxyalkanes.

The polyols employed can have hydroxyl numbers which vary over a wide range. In general, the hydroxyl numbers of the polyols employed in the invention can range from 20 to 150. The hydroxyl number is defined as the number of milligrams of potassium hydroxide equivalent to the hydroxyl content of one gram of polyol. The hydroxyl number can also be defined by the equation:

$$OH = \frac{56.1 \times 1000 \times f}{m.w.} \quad (A)$$

where

OH = hydroxyl number of the polyol;

f = functionality, that is, a average number of hydroxyl groups per molecule of polyol;

m.w. = molecular weight of the polyol.

The particular polyol employed depends upon the end-use of the polyurethane product to be produced. The molecular weight or the hydroxyl number is selected properly to result in flexible or semi-flexible foams or elastomers when the polymer/polyol dispersion produced from the polyol is converted to a polyurethane. The polyols preferably possess a hydroxyl number of from 50 to 150 for semi-flexible foams, and from 20 to 70 for flexible foams. Such limits are not intended to be narrowly restrictive, but are merely illustrative of the large number of

possible combinations of the above polyol coreactants.

If desired, a polyol blend containing a small amount of a high molecular weight polyol and a major amount of a low or a medium molecular weight polyol can be used. Also, a polyol-polymer/polyol blend containing a small amount of a polymer/polyol (prepared in a high molecular weight polyol) and a major amount of a low or a medium molecular weight polyol, as disclosed in U.S. Patent No. 4,148,840, can be used as the polyol component.

The most preferred polyols employed in this invention include the poly(oxypropylene)glycols, triols, higher functionality polyols and any of these that are capped with ethylene oxide. These polyols also include poly(oxypropyleneoxy-ethylene)polyols; however, desirably, the oxyethylene content should comprise less than 80 percent of the total and preferably less than 60 percent. The ethylene oxide, when used, can be incorporated in any fashion along the polymer chain. Stated another way, the ethylene oxide can be incorporated either in internal blocks, as terminal blocks, or may be randomly distributed along the polymer chain. As is well known in the art, the polyols that are most preferred herein contain varying small amounts of unsaturation. As taught by U.S. Pat. Nos. 3,304,273, 3,383,351, and Re. 28,715 , unsaturation in itself does not affect in any adverse way the formation of the polymer/polyols in accordance with the present invention except in the case where the extent or

type of unsaturation is so high or effective as to result in a dispersion of the polymer in a polyol that is gelled. Thus small amounts of unsaturation can be incorporated into the polyol without departing from the scope of the present invention.

The copolymers in the polymer/polyol dispersions of this invention contain from 0.5 weight percent to 90 weight percent, based on the weight of the copolymer, of polymerized acrylonitrile and from 10 weight percent to 99.5 weight percent of another polymerized halocarbon-free monomer. The copolymers are characterized by a crosslinking coefficient of less than about 55. Polymerized acrylonitrile is a necessary comonomer in the copolymers in dispersions of this invention, because it forms polymer/polyol dispersions that are stable to phase separation and that produce polyurethane foams having superior load bearing properties. The weight percent of polymerized acrylonitrile in the copolymer can range from 0.5% to 90%, more preferably from 20% to 80% and most preferably from 30% to 70%.

Suitable polymerizable halocarbon-free monomers include styrene, p-methylstyrene, p-chlorostyrene, acrylates, methacrylates, methacrylonitrile, vinyl acetate. For a more detailed list of comonomers, reference is made to U.S. Patent Nos. 3,931,092 and 4,093,573.

As disclosed in the Simroth application, the degree of crosslinking of a copolymer in a polymer/polyol dispersion used to make a

polyurethane foams affects the combustion resistance of the polyurethane foam. In general, a copolymer with a low degree of crosslinking leads to a polyurethane foam having greater combustion resistance.

The degree of crosslinking of the copolymer is a function of many variables. The most significant are the weight percent of polymerized acrylonitrile in the copolymer and three process parameters in the polymerization of the copolymer: the concentration of free-radical polymerization catalyst, the residence time of the monomers, copolymer and polyol in the polymerization reactor, and the concentration of a chain transfer agent. In general, a lower degree of crosslinking is observed with lower weight percents of polymerized acrylonitrile, higher catalyst concentration, lower residence time and higher concentrations of chain transfer agents.

The degree of crosslinking of a copolymer in a polymer/polyol dispersion can be expressed as a crosslinking coefficient. The crosslinking coefficient (XLC) is defined, as in the Simroth application as follows:

$$XLC = 100 - LT$$

wherein LT is the light transmission of a dispersion or solution of the copolymer containing polymer/polyol in dimethyl formamide (DMF), which is determined in accordance with the following procedure.

A sample of the copolymer containing polymer/polyol dispersion is mixed with DMF such

that the resulting mixture contains one percent copolymer by weight of the resulting mixture. This mixture is transferred to one of two matched 1 cm. transmission cells while the second matched cell is filled with DMF (experimental analysis has indicated that the influence of any polyol added to DMF is insignificant within the bounds of normal statistical error and thus can be dispensed with in the control cell). A spectrophotometer, such as a Bausch and Lomb Spectronic 710, is calibrated to 100 percent transmission for the transmission of light at 500 millimicrons wave length through the second, DMF filled cell. After this calibration the percent light transmission through the first, polymer/polyol/DMF-filled cell is measured and referred to as LT for light transmission.

Experimentation has demonstrated that when the stable dispersion of a polymer in a polyol has an XLC value of less than 55 improvement in the combustion resistance of the resulting polyurethane becomes significantly apparent. It is preferred that the XLC value be 50 or less with values 20 or less the more preferred and a value of about zero (0) being the most preferred since it represents the least crosslinked polymer.

It should be noted that although the copolymer in the dispersions of this invention has a low crosslinking coefficient, the light transmission values of the polymer/polyol dispersions of this invention may be low due to a high crosslinking coefficient of the terpolymer in the polymer/polyol dispersions.

The terpolymers in the polymer/polyol compositions of this invention contain from 0.5 weight percent to 45 weight percent polymerized halocarbon monomer, from 10 weight percent to 50 weight percent polymerized acrylonitrile and a weight percent balance of another polymerized ethylenically unsaturated monomer.

Suitable halocarbon monomers include vinyl chloride, 2,3-dibromopropyl acrylate or methacrylate, 2,3-dichloropropyl acrylate or methacrylate, chloromethylstyrene . The preferred halocarbon monomer is vinylidene chloride.

The weight percentage of polymerized halocarbon monomer in the terpolymer ranges from 0.5% to 45%, more preferably from 1% to 30% and most preferably from 3% to 10%. The weight percentage of polymerized acrylonitrile can range from 20% to 50%, more preferably from 25% to 40% and most preferably from 30% to 35%. The other polymerized monomer, which makes up the balance of the weight of the terpolymer, is any other ethylenically unsaturated monomer such methacrylonitrile, methyl methacrylate, α-methylstyrene, para-methylstyrene or, preferably, styrene.

The total concentration of copolymer and terpolymer in the polymer/polyol compositions of this invention can range from 5 weight percent to 55 weight percent, based on the total weight of the dispersion, more preferably from

10% to 45%, and most preferably from 20% to 40%. The total concentration of polyol, plus optional stabilizers and other additives make up the remainder of the dispersion. The weight ratio of copolymer to terpolymer is adjusted such that the amount of chlorine or bromine bonded directly to an aliphatic carbon atom in the dispersion ranges from 0.2% to 18%, more preferably from 0.5 to 12%, and most preferably from 1% to 7% based on the total weight of the dispersion.

The stable polymer/polyol dispersion of this invention can be prepared in any manner that will result in a polymer/polyol dispersion which contains a copolymer and a terpolymer as described above, in the amounts described above, wherein the copolymer has the crosslinking coefficient described above.

One convenient method, hereinafter the "Blend Method", is to separately prepare two polymer/polyols, one containing only the copolymer (a copolymer/polyol) and one containing only the terpolymer (a terpolymer/polyol). The crosslinking coefficient of the copolymer can then be determined by measuring the light transmission of the copolymer/polyol. The two polymer/polyols are then blended in amounts calculated to yield the desired total concentration of copolymer and terpolymer and the weight ratio of copolymer to terpolymer that will yield the necessary levels of aliphatic chlorine or bromine. No special blending or mixing equipment is required to ensure efficient and complete mixing of the polymer/polyols to obtain the

stable polymer/polyol dispersions of this invention by the Blend Method.

The copolymer/polyols useful in making the stable polymer/polyol dispersions of this invention can be made in accordance with the procedures described in the Simroth application. The process used in producing the copolymer/polyol compositions useful in this invention involves polymerizing the monomers in the polyol while maintaining a low monomer to polyol ratio throughout the reaction mixture during the polymerization. Such low ratios are achieved by employing process conditions that provide rapid conversion of monomer to polymer. In practice, a low monomer to polyol ratio is maintained, in the case of semi-batch and continuous operation, by use of a free-radical polymerization catalyst, control of the temperature and mixing conditions and, in the case of semi-batch operation by slowly adding the monomers to the polyol. The mixing conditions employed are those attained using a back-mixed reactor, a stirred flask or a stirred autoclave. Such reactors keep the reaction mixture relatively homogeneous and so prevent localized high monomer to polyol ratios such as occur in certain tubular reactors. However, tubular reactors can be employed if modified so that increments of the monomer are added to various stages.

The process variables identified above as influencing the degree of crosslinking interact between themselves in such a manner that no one individual variable has parameters which in and of themselves are critical in attaining the necessary

degree of crosslinking. In other words, the selection of the level of any one variable depends upon the levels selected for the remaining variables such that the combination of variables results in a XLC value within the limits defined as necessary to obtain the desired end product. Improvement has been observed by increasing the catalyst concentration, lowering the residence time, reducing the proportion of acrylonitrile in the copolymer, increasing the concentration of a chain transfer agent, or various combinations of the above. Preferred ranges are indicated for each variable. Although individual levels for each variable may be selected on the basis of product needs or economic considerations, the overall combination must result in the proper XLC value as determined by the test procedure set forth above.

Control of residence time has been found useful in controlling the degree of crosslinking. In a continuous operation to produce a stable dispersion of a polymer in a polyol the residence time in the first reactor has been found to substantially control the degree of crosslinking in the polymer. By residence time in a continuous operation what is meant is that time calculated by dividing the reactor's volume by the volumetric flow rate of the total feed to the reactor. Residence times of from 1 minute to 5 hours can be employed, preferably 10 minutes to 2 hours.

In a semi-batch operation where the reactor can be partially charged prior to initiating polymerization, the term residence time refers to that period of time during which significant polymerization between the acrylonitrile and the comonomer(s) is occurring. Here, residence times of from 30 minutes to 10 hours are recommended.

The monomer feed insofar as it relates to the percent copolymer in the dispersion of polymer in the polyol is not limiting so long as the final dispersion is stable and does not separate out upon standing. In this regard, total copolymer in the dispersion can range from .5 weight percent to up to or greater than 50 weight percent.

The polymerization can also be carried out with an inert organic solvent present. The only requirements in the selection of the solvent is that it does not dissolve the copolymer nor interfere with the monomer's polymerization reaction. When an inert organic solvent is used, it is generally removed from the reaction mixture by conventional means before the polymer/polyol dispersion of this invention is used to produce polyurethane foams.

The catalysts useful in producing the copolymer/polyol dispersions are the well known free radical type vinyl polymerization catalysts for the formation of polymer polyols, for example, peroxides, azo compounds such as azobisisobutyronitrile, and mixtures thereof.

The catalyst concentration useful in controlling the degree of crosslinking should range from 0.1 to 5.0 weight percent based on the total feed to the reactor and preferably from

0.3 to 1.0. Although, as mentioned above any free-radical type vinyl polymerization catalyst can be used, 2,2'-azobis-(isobutyronitrile) is preferred because is does not increase the acid number of the product, does not impart an objectionable odor to the product, and does not require special handling, as compared to certain peroxide catalysts.

The temperature used in producing the copolymer/polyol dispersions is any temperature at which the catalyst has a desirable rate of decomposition under the reaction conditions. In the case of a continuous process, reaction temperatures of greater than 100°C are preferred. The maximum temperature used is not narrowly critical but should be lower than the temperature at which significant decomposition of the product occurs. By way of illustration, 2,2'-azobis(isobutyronitrile) has a preferred temperature range from 105°C to 135°C.

Temperatures at which the half life of the catalyst is no longer than about six minutes are desirable. Temperatures of typical catalysts with half lives of six minutes are:

| Catalyst | Temperature |
|---|---|
| Azobisisobutyronitrile | 100°C |
| Lauroyl Peroxide | 100°C |
| Decanoyl Peroxide | 100°C |
| Benzoyl Peroxide | 115°C |
| p-Chlorobenzoyl Peroxide | 115°C |
| t-Butyl Peroxyisobutyrate | 115°C |
| Acetyl Peroxide | 105°C |
| Propionyl Peroxide | 102°C |
| 2-t-Butylazo-2-cyanobutane | 129°C |

Finally, the addition of chain transfer agents to the polymerization has been demonstrated to be useful in controlling the degree of cross-linking. Chain transfer agents may be added in an amount from 0.1 to 10 weight percent or more based on the total feed to the reactor and preferably from 1 to 5 weight percent. Suitable chain transfer agents include any material that exhibits chain transfer activity. Useful classes of chain transfer agents include mercaptans, ketones, alcohols, aldehydes, halogenated compounds, benzene derivatives . Chain transfer agents selected from among such classes may be used alone or in combination. The preferred chain transfer agent is isopropanol due to its low toxicity, low odor, availability, cost effectiveness and ease of removal.

The terpolymer/polyol dispersions useful in making the stable polymer/polyol dispersions of this invention by the Blend Method can be made by the procedures described above for making the copolymer/polyol dispersions useful in the Blend Method. However, in the making of the terpolymer/polyol dispersion, it is not necessary to control the process parameters, such as catalyst concentration, residence time, use of chain transfer agents, which affect the degree of crosslinking of the terpolymer.

In producing the terpolymer/polyol dispersions, dehydrohalogenation may occur, especially at high reaction and stripping temperatures (above 100°C.). To minimize the

problems associated with dehydrohalogenation, the concentration of halocarbon monomer in the monomer feed should be adjusted such that the weight percentage of polymerized halocarbon monomer in the terpolymer is less than about 45 percent. A continuous process having the shortest possible residence time (instead of a semi-batch process) is preferred.

The use of an epoxidized oil and/or a metal stabilizer to prevent thermal degradation during processing and to extend the service life of finished products is known in the art of polymers which contain halocarbon monomers. However, not all of these stabilizers work in controlling dehydrohalogenation in the terpolymer/polyol dispersions used in the Blend Method. The acid number (which is indicative of the degree of dehydrohalogenation) of the terpolymer/polyols can be kept to an acceptable level by adding an epoxy plasticizer to the unstripped product. In a preferred embodiment, an epoxidized oil is added to the polyol stream before polymerization. For example, small amounts of epoxidized soybean oil (e.g., Flexol® Plasticizer EPO) or octyl epoxytallate (e.g., Flexol® Plasticizer EP-8) have been found to be efficacious in controlling dehydrochlorination of the terpolymers useful in this invention.

When producing either a copolymer/polyol or a terpolymer/polyol due consideration must be given to the reactivity ratios of the chosen monomers and the effect of the reactivity ratios on monomer

conversion. For example, the low reactivity of a given monomer with the other comonomers may result in lower conversions of the comonomers and thereby affect the monomer composition of the resulting polymer/polyol. The reactivity ratios and expected monomer conversions should therefore be taken into account when the composition of the monomer feed stream is selected to produce the copolymer and terpolymers useful in this invention.

In addition to the preferred Blend Method described above, the polymer/polyol dispersions of this invention can be made by any other suitable method. For example, the polymer/polyols of this invention can be made by producing the copolymers in the total amount of polyol desired in the final polymer/polyol dispersion. This method involves producing an intermediate dilute copolymer dispersion. The cross-linking coefficient of the copolymer in the dilute dispersion can be measured. Then the monomers used to produce the terpolymer can be polymerized in the dilute copolymer/polyol to produce the final polymer/polyol dispersion of this invention.

In the polymer/polyol dispersions of this invention, the polymers (copolymers and terpolymers) are stably dispersed in the polyol. The means for achieving stability in polymer/polyol dispersions are well known in the art. Such means include proper selection of polyol molecular weight, polymer concentration, catalysts, stabilizing additives, mixing conditions.

The invention also provides novel flexible to semi-flexible polyurethane foams or elastomers produced by reacting: (a) a polymer/polyol dispersion of this invention and (b) an organic polyisocyanate in the presence of (c) a catalyst. The reaction can be performed in any suitable manner such as by the prepolymer or one-shot technique. When the polyurethane is a foam, the reaction mixture may also contain a polyol such as the one used to make the polymer/polyol, a blowing agent, and a foam stablizer.

The invention also provides novel polyurethane elastomers produced by reacting (a) a polymer/polyol dispersion of this invention and (b) a polyisocyanate compound in the presence of (c) a catalyst for the reaction of (a) and (b).

The organic polyisocyanates that are useful in producing polyurethanes in accordance with this invention are organic compounds that contain at least two isocyanato groups. Such compounds are well known in the art of producing polyurethane foams. Suitable organic polyisocyanates include the hydrocarbon diisocyanates, (e.g., the alkylene diisocyanates and the arylene diisocyanates) as well as know triisocyanates and polymethylene poly(phenylene isocyanates). As examples of suitable polyisocyanates are 1,2-diisocyanatoethane, 1,4-diisocyanatobutane, 2,4-diisocyanatotoluene, 2,6-diisocyanatotoluene, 1,3-diisocyanato-o-xylene, 1,3-diisocyanto-m-xylene, 1,3-diisocyanato-p-xylene, 2,4-diisocyanato-1-chlorobenzene, 2,4-diisocyanate-1-nitrobenzene,

2,5-diisocyanate--nitrobenzene, 4,4'-diphenylmethylene diisocyanate; 3,3'-diphenylmethylene diisocyanate; and polymethylene poly(phenyleneisocyanates) having the formula:

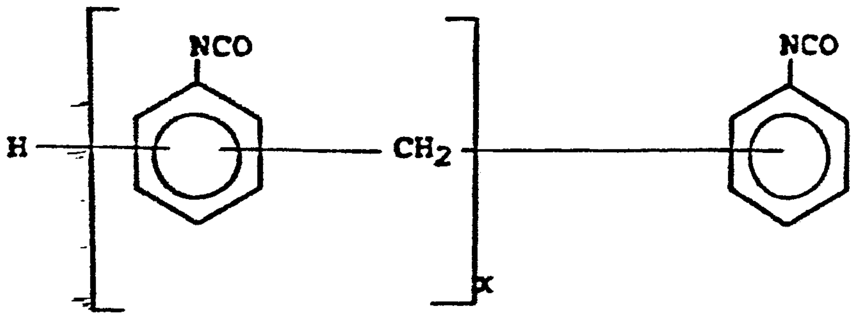

wherein x has an average value from 1.1 to 5 inclusive (preferably from 2.0 to 3.0). The preferred polyisocyanates are a mixture of 80% 2,4-tolylene diisocyanate and 20% 2,6-tolylene diisocyanate (hereinafter TDI) and a mixture that is about 80% TDI and about 20% of a polymeric isocyanate.

The catalysts that are useful in producing polyurethane in accordance with this invention include: tertiary amines such as bis(N,N'-dimethylaminoethyl)ether, trimethylamine, triethylamine, N-methylmorpholine, N-ethylmorpholine, N,N-dimethylethanolamine, N,N,N',N'-tetramethyl-1, 3-butanediamine, triethanolamine, 1,4-diazabicyclo[2.2.2.]octane, pyridine oxide, and organotin compounds such as dialkyltin salts of carboxylic acids, e.g., dibutyltin diacetate, dibutyltin dilaurate, dibutyltin maleate, dilauryltin diacetate, dioctyltin diacetate.

. Similarly, there may be used a trialkyltin

hydroxide, dialkyltin oxide, dialkyltin dialkoxide, or dialkyltin dichloride. Examples of these compounds include trimethyltin hydroxide, tributyltin hydroxide, trioctyltin hydroxide, dibutyltin oxide, dioctyltin dichloride, . The catalysts are employed in small amounts, for example, from 0.001 percent to 5 percent based on weight of the reactants.

The blowing agents useful in producing polyurethane foams in accordance with this invention include water and halogenated hydrocarbons such as trichloromonofluoromethane, dichlorodifluoromethane, dichloromonofluoromethane, dichloromethane, trichloromethane, 1,1-dichloro-1-fluoroethane, 1,1,2-trichloro-1,2,2-trifluoromethane, hexafluorocyclobutane, octafluorocyclobutane, . Another class of blowing agents include thermally-unstable compounds which liberate gases upon heating, such as N,N'-dimethyl-N,N'-dinitrosoterephthalamide, amine formates . The generally preferred method of foaming for producing flexible foams is the use of water or a combination of water plus a fluorocarbon blowing agent such as trichloromonofluoromethane. The quantity of blowing agent employed will vary with factors such as the density desired in the foamed product.

The foam stablizers useful in producing polyurethane foams in accordance with this invention include "hydrolyzable" polysiloxane-polyoxyalkylene block copolymer such as the block copolymers described in U.S. Pat. Nos. 2,834,748 and 2,917,480. Another useful class of foam stablizers

includes the "non-hydrolyzable" polysiloxane-polyoxyalkylene block copolymers such as the block copolymers described in U.S. Pat. Nos. 3,505,377 and 3,686,254 and British Patent Specification 1,220,471. Yet another useful class of foam stabilizers is composed of the cyanonalkyl-polysilozanes, as described in U.S. Pat. No. 3,905,924.

Polyurethane products produced in accordance with this invention are useful in the applications in which polyurethanes made from conventional polymer/polyol compositions are employed. The polymer/polyol compositions of this invention are particularly useful in the production of high resiliency foams for use in arm rests, mattresses, automobile seats and the like.

## EXAMPLES

The following examples illustrate the Blend Method of preparing the stable polymer/polyol dispersions of this invention.

In the following examples and tables a single letter designation denotes a comparative Example wherein the polymer/polyol contained only a copolymer, above and below the crosslinking coefficient limit of 55; a double letter designation denotes a comparative Example wherein the polymer/polyol contained only a terpolymer containing vinylidene chloride; and an Arabic numeral designation denotes a polymer/polyol dispersion of the instant invention.

**DEFINITIONS**

As used in the Examples appearing below, the following designations, symbols, terms and abbreviations have the indicated meanings.

"Theoretical molecular weight" of a polyol denotes a number average molecular weight calculated using equation (A) above based on the functionality of the starter used to produce the polyol and the experimentally determined hydroxyl number of the polyol.

"Triol" or "Diol" denotes the nominal functionality of a polyol based on the functionality of the starter. Actual polyol functionalities are somewhat lower (3 to 20% lower) than nominal functionality because of the presence of some amount of lower functionality material produced by side reactions. These side reactions are more significant the higher molecular weight of the polyol being produced.

Polyol I - A polyalkylene oxide triol produced from propylene and ethylene oxides and glycerine and having theoretical number average molecular weight of 5000 and a hydroxyl number of about 34. The alkylene oxide units are present primarily in blocks and the primary OH content is about 75%. The ethylene oxide is used to "cap" the triol. Based on its alkylene oxide content, this triol contains 85 wt.% $C_3H_6O$ and 15 wt.% $C_2H_4O$.

Polyol II - A polyalkylene oxide tetrol produced

from propylene and ethylene oxides and pentaerythritol and having a theoretical number average weight of 8000 and a hydroxyl number of about 28. The alkylene oxide units are present primarily in blocks and the primary OH content is about 82%. The ethylene oxide is used to "cap" the polyol. Based on its alkylene oxide content, this polyol contains 85 wt. % $C_3H_6O$ and 15 wt. % $C_2H_4O$.

Polyol III - A polyalkylene oxide triol, produced from propylene and ethylene oxides and glycerine and having a theoretical number average weight of 4740 and a hydroxyl number of about 35.5. The alkylene oxide units are present primarily in blocks and the primary OH content is about 80%. The ethylene oxide is used to "cap" the triol. Based on its alkylene oxide content, this triol contains 83.5 wt. % $C_3H_6O$ and 16.5 wt.% $C_2H_4O$.

Polymerization Catalyst - 2,2'-azobis(isobutyronitrile)

Catalyst A - Diethanolamine.

Catalyst B - Mixture of formic acid (60 wt. %), bis(dimethylaminoethyl)ether (28 wt. %) and dipropyleneglycol (12%)

Catalyst B' - Mixture of bis(dimethylaminoethyl) ether (70 wt. %) and dipropyleneglycol (30 wt. %)

Catalyst C - Diazobicyclooctane.

Catalyst D - Dibutyl tin dilauryl sulfide.

Silicone Surfactant - A silicone surfactant available from Union Carbide Corporation under the trade designation Y-10,184.

TDI A mixture of 80% 2,4-tolylene diisocyanate and 20% 2,6-tolylene diisocyanate

Stabilizer A- An expoxized soybean oil available from Union Carbide Corporation under the registered trademark FLEXOL® Plasticizer EPO.

Stabilizer B- A dispersion stabilizer which is the reaction product of Polyol I with maleic anhydride and ethylene oxide as disclosed in U.S. Application Serial No. 562,452, filed December 20, 1983.

Polymeric-isocyanate A polymethylene-poly(phenyleneiso-cyanate) having an average of 2 to 3 repeating methylenephenyleneisocyanate units.

## Polyurethane Foam Preparation

The polymer/polyol dispersions indicated in the examples were used to prepare polyurethane foams in accordance with the following procedure.

Molded foams were prepared from the polymer/polyols of the Examples by the following procedure using one of the formulations of components shown in Table I. All parts are by weight unless otherwise indicated. The polymer/polyol dispersion, water, catalysts, and surfactant were mixed in a one half gallon paper carton fitted with a 4000 rpm mixer and baffles for 55 seconds. The isocyanate was then added rapidly and mixing was resumed for an additional 5 seconds. The mixture is quickly poured into a waxed aluminum mold which had been preheated to 50-60° C. The mold was then quickly closed and clamped. After two minutes, the mold was placed in an oven at 120°C for 5 to 8 minutes. The foam was then removed from the mold and post cured 30 minutes at 120°C. After curing the foam specimens were cut and burned per FMVSS-302. The total burn length reported was measured as the distance from the foam edge nearest the flame to the point of extinguishment.

TABLE I

Molded Foam Formulations

| Formulation | A | B |
|---|---|---|
| Polymer/Polyol dispersion of Examples | 100 | 100 |
| Water | 3.7 | 4.5 |
| Catalyst A | 1.0 | 1.7 |
| Catalyst B | 0.018 | - |
| Catalyst B' | - | 0.1 |
| Catalyst C | 0.072 | 0.3 |
| Catalyst D | 0.0065 | 0.0065 |
| Silicone Surfactant | 2.0 | 1.6 |
| TDI (index) | 104 | 103 |

COPOLYMER/POYOL PREPARATION.

The copolymer/polyol compositions of the Examples were prepared continuously in a tank reactor fitted with baffles and an impeller. The feed components were pumped into the reactor continuously after going through an inline mixer to assure complete mixing of the feed components before entering the reactor. The internal temperature of the reactor was controlled to within one degree Centrigrade. The contents of the reactor were well mixed. The product flowed out of the top of the reactor continuously through a back pressure regulator that had been adjusted to give some positive back pressure in the reactor. Portions of the crude product were vacuum stripped at 2 millimeters absolute pressure and 120° to 130°C for testing. Conversions were determined from analysis of the amount of unreacted monomers present in the crude product before stripping. All of the polymer/polyols in the Examples were stable compositions.

TABLE II

COPOLYMER/POLYOL DISPERSION PREPARATION AND PROPERTIES

| Copolymer/Polyol | A | B | C (3) |
|---|---|---|---|
| Reaction Temperature (°C) | 120 | 116 | ---- |
| Polymerization Catalyst in feed | 0.75 | .70 | ---- |
| Wt. % Monomers in feed | 25.7 | 28.3 | ---- |
| Monomer Types (1) | A/S | A/S | A/S |
| Ratio of Monomers | 50/50 | 30/70 | 30/70 |
| Polyol Type | I | III | III |
| Residence Time, (min) | 20 | 20 | ---- |
| Chain Transfer Agent (2); wt. % | ISOP; 3 | ISOP; 3 | ---- |
| Total Polymer (Wt. %) | 22.5 | 28.0 | 11.2 |
| XLC | 1.3 | 1.5 | ---- |
| Foam Formulation | A | B | B |
| Total Foam Burn-Length, (4) (in.) | (3-8) | (3-5) | (4) (7.4) (6) |
| mm | 76-203 | 76-127 | 102 188 152 |

(1) A - Acrylonitrile
S - Styrene

(2) ISOP - Isopropanol

(3) Made by blending 40 parts by weight copolymer/polyol of Example B with 60 parts by weight of Polyol III.

(4) The ranges of 3-8 and 3-5 in include many data points having a wide scatter from test to test.

Terpolymer/Polyol Dispersion Preparation

Examples AA and BB

The terpolymer/polyol of Examples AA and BB were made in a laboratory, 500 ml., single stage, continuous, back-mixed reactor having verticle internal baffles and equipped with a mechanical agitator at a 12 minute residence time. The polymerization catalyst, 2,2'azobis(isobutyronitrile), was dissolved in a monomer feed stream containing the three monomers. Stabilizers A and B were dissolved in the polyol and fed in a polyol/stabilizer stream. The two feed streams were fed simultaneously to the reactor through an in-line mixer. The catalyst concentration was 0.6% based on the total weight of the two feeds. The monomer feed was a 30/70 weight ratio of acrylonitrile/styrene. The preparation parameters and properties are shown in Table III, below.

TABLE III

| Terpolymer/Polyol | AA | BB |
|---|---|---|
| Acrylonitrile Fed | 5.25 | 5.25 |
| Styrene Fed | 12.3 | 12.3 |
| $VCl_2$ fed | 9.75 | 9.75 |
| Pressure, (psig) bar | (40.0) 2,76 | (40.0) |
| Temperature, °C | 115 | 130 |
| Residence time, h . | 0.2 | 0.2 |
| Polyol | II | II |
| Wt. % Polyol | 67.1 | 67.1 |
| Stabilizer A, % of total | 2.0 | 2.0 |
| Stabilizer B, % of total feed | 3.64 | 3.64 |
| Total Polymer, wt. %, (calc.) | 20.2 | 20.2 |
| Percent Chlorine (1) | 5.45 | 5.45 |
| Brookfield visc., 25°C, mPa·s | 2000 | 1200 |
| Filterability, 100 µm (150 mesh), %/s | 100/36 | 100/26 |
| 30 µm (700 mesh), %/s | 26.2/972 | 9.7/1412 |
| Centifugible Solids | 2.8 | 4.6 |
| XLC | 1.5 | 2.5 |

(1) Wt. % based on total terpolymer/polyol as measured by gravimetric analysis of degraded sample.

Example CC

The terpolymer/polyol of Example CC was prepared by a semi-batch process. In the semi-batch process, a four-neck, two liter resin kettle was fitted with a thermocouple well, stirrer shaft bushing suitable

for low pressure, reflux condenser and inlet feed tube. The stirrer shaft contained two multi blade turbines controlled at 720 rpm. The resin kettle was fitted with four equally spaced baffles. A one-liter glass feed tank was connected to a feed pump which discharged through a 6,35 mm(1/4 inch) stainless steel tube into one neck of the resin kettle through a Teflon bushing. The feed line was equipped with a pressure gauge and pressure release valve set to release at (15 psig) 1,035 bar.

The stirrer shaft entered the center neck of the reactor. The reflux condenser was a (1/2 inch) 12,7 mm stainless steel tube with a ten inch glass cooling shell leading to a back pressure regulator set at 10 psig. The resin kettle reactor was charged with one-third of the polyol/stabilizer mixture. This mixture was heated under nitrogen with stirring to the reaction temperature. The balance of the polyol/stabilizer mixture was combined with the monomer mixture plus the polymerization catalyst and charged to the feed tank. This mixture with monomers was pumped to the reactor at a rate required to finish the addition in four hours. After the feed was finished, the product was heated with stirring at the reaction temperature for an additional half hour. The weight of the initial charge to the reactor plus total feed was 1200 grams. The preparation parameters and properties of Example CC are shown in Table IV below.

TABLE IV

| Terpolymer/Polyol | CC |
| --- | --- |
| Acrylonitrile Fed | 5.22 |
| Styrene Fed | 12.19 |
| $VCl_2$ fed | 9.69 |
| Stabilizer A, % of total | 1.98 |
| Pressure,(psig) bar | (9.0) 0.62 |
| Temperature, (°C) | 115 |
| Residence time, (hr.) | 4.3 |
| Base Polyol | I1 |
| Base Polyol, (wt. %) | 67.3 |
| Stabilizer B, % of total feed | 3.6 |
| Total Polymer, wt. %, calc. | 25.1 |
| Percent Chlorine (1) | 3.06 |
| Brookfield visc., 25°C,(cps.) mPa·s | 4200 |
| Filterability, 100 µm (150 mesh), %/s | 100/32 |
| 30 µm (700 mesh)., %/s | 38/649 |
| Centifugible Solids | 2.5 |
| XLC | 6.7 |

(1) Wt. % based on total terpolymer/polyol as measured by gravimetric analysis of degraded sample.

EXAMPLES DD-GG

The terpolymer/polyols of Examples DD-GG were prepared as in Examples AA and BB with the exception that the continuous, back-mixed laboratory reactor used for Examples DD-GG was a two-stage reactor and Examples EE and GG illustrate the use of isopropanol as a chain transfer agent in preparing the terpolymer polyols as is indicated in Table V below.

TABLE V

| Terpolymer/Polyol | DD | EE | FF | GG |
|---|---|---|---|---|
| Polyol | III | III | | |
| % Polyol | 59.72 | 56.97 | 59.69 | 56.52 |
| Stabilizer B (wt. %) | 5.20 | 4.66 | 5.19 | 4.92 |
| Polymerization Catalyst (wt. %) | 0.7 | 0.7 | 0.7 | 0.7 |
| Stabilizer A (wt. %) | 2.0 | 2.0 | 2.0 | 2.0 |
| Isopropanol (wt. %) | 0.0 | 5.02 | 0.0 | 5.0 |
| Total Monomer Feed (wt. %) | 32.38 | 30.35 | 32/42 | 30.86 |
| $A/S/VCl_2$ (wt. ratios) | 21/49/30 | 21/49/30 | 19.5/45.5/35 | 19.5/45.5/35 |
| Reaction Temperature °C | | | | |
| First Stage | 125 | 125 | 115 | 134 |
| Second Stage | 127 | 127 | 118 | 134 |
| Pressure (psig) bar | (45 ) 3,1 | (45 ) | ( 45 ) | ( 45 ) |
| Residence Time (min.) | | | | |
| First Stage | 21 | 21.1 | 21.1 | 20.9 |
| Second Stage | 24 | 24.1 | 24.2 | 23.9 |
| Total Polymer (wt. %) | 28.18 | 26.83 | 27.55 | 22.17 |
| Poly Acrylonitrile (wt. %) | 6.36 | 5.47 | 5.80 | 4.83 |
| Poly Styrene (wt. %) | 15.3 | 14.95 | 14.40 | 12.84 |
| Poly Vinylidene Chloride | 6.65 | 5.91 | 7.29 | 4.50 |
| Brookfield Viscosity (cps) mPa·s | 3500 | 3200 | 3300 | 4150 |
| Filterability | | | | |
| 1500 mesh %/sec | 100/20 | 100/17 | 100/19 | 76/1200 |
| 700 mesh %/sec. | 100/565 | 100/862 | 100/390 | -- -- |
| XLC | 65.9 | 2.4 | 4.2 | 73 |

Copolymer/Terpolymer/Polyol Preparation

For examples 1-29, the copolymer/polyol of Example A was blended with individual terpolymer/polyols of Examples AA-CC. The ratio of blended copolymer/polyol to terpolymer/polyol, the resulting copolymer/terpolymer weight ratio, total polymer content, chlorine content and the total foam Burn Length of foams prepared from the blends are shown in Table VI.

For examples 30-33, the copolymer/polyol of Example B and an amount of Polyol III were blended with the terpolymer/polyols of examples DD-GG. The ratios of polyol, copolymer/polyol and terpolymer/polyol. The copolymer/terpolymer ratio, the total polymer content, the chlorine content, and the total foam Burn Length of these foams are shown in Table VII.

**TABLE VI**

**STABLE POLYMER/POLYOL DISPERSIONS CONTAINING**

**A COPOLYMER AND A TERPOLYMER**

| Example | 1 | 2 | 3 | 4 | 5 | 6 | 7 | 8 |
|---|---|---|---|---|---|---|---|---|
| CP (1) | H | H | H | H | H | H | B | B |
| TP (2) | AA | AA | AA | AA | AA | AA | AA | AA |
| CP/TP (wt. %/wt. %) | 80/20 | 80/20 | 83.3/16.7 | 83.3/16.7 | 87.5/12.5 | 87.5/12.5 | 90/10 | 90/10 |
| Total Polymer (wt. %) | 22.0 | 22.0 | 22.1 | 22.1 | 22.2 | 22.2 | 22.3 | 22.3 |
| C/T (3) (wt. %/wt. %) | 18/4 | 18/4 | 18.7/3.4 | 18.7/3.4 | 19.7/2.5 | 19.7/2.5 | 20.3/2.0 | 20.3/2.0 |
| Chlorine (4) (wt. %) | 1.09 | 1.09 | 0.91 | 0.91 | 0.68 | 0.68 | 0.55 | 0.55 |
| Formulation | A | A | A | A | A | A | A | A |
| Burn Length (in.) mm | (0.9) 23 | (0.9) 23 | (0.9 ) 23 | ( 0.9) 23 | ( 1.1) 28 | (1.0) 25 | ( 1.0) 25 | ( 0.9) 23 |

| Example | 9 | 10 | 11 | 12 | 13 | 14 | 15 |
|---|---|---|---|---|---|---|---|
| CP | H | H | B | B | B | B | B |
| TP | AA | AA | AA | AA | AA | AA | AA |
| CP/TP | 90/10 | 90/10 | 95/5 | 95/5 | 95/5 | 95/5 | 95/5 |
| Total Polymer | 22.3 | 22.3 | 22.4 | 22.4 | 22.4 | 22.4 | 22.4 |
| C/T (wt. %/wt. %) | 20.3/2.0 | 20.3/2.0 | 21.4/1.0 | 21.4/1.0 | 21.4/1.0 | 21.4/1.0 | 21.4/1.0 |
| Chlorine (wt. %) | 0.55 | 0.55 | 0.27 | 0.27 | 0.27 | 0.27 | 0.27 |
| Formulation | A | A | A | A | A | A | A |
| Burn Length (in.) mm | (1.2 ) 30 | (1.4 ) 36 | (1.0 ) 25 | ( 1.0) 25 | ( 2.1-2.2) 53 - 56 | ( 3.6-4.1) 91 - 104 | ( 2.2 ) 56 |

(1) CP = copolymer/polyol from Example indicated.
(2) TP = terpolymer/polyol from Example indicated.
(3) C = copolymer from copolymer/polyol indicated.
T = terpolymer from terpolymer/polyol indicated.
(4) = calculated for the blend on the basis of the wt. % chlorine in the terpolymer polyol as indicated by gravimetric analysis of degraded samples.

**TABLE VI (Cont.)**
**STABLE POLYMER/POLYOL DISPERSIONS CONTAINING COPOLYMERS AND TERPOLYMERS**

| Example | 16 | 17 | 18 | 19 | 20 | 21 | 22 |
|---|---|---|---|---|---|---|---|
| CP | B | B | B | B | B | B | B |
| TP | AA | AA | AA | AA | AA | AA | AA |
| CP/TP (wt. %/wt. %) | 96.7/3.3 | 96.7/3.3 | 96.7/3.3 | 98.3/1.7 | 98.3/1.7 | 98.3/1.7 | 98.9/1.1 |
| Total Polymer (wt. %) | 22.4 | 22.4 | 22.4 | 22.5 | 22.5 | 22.5 | 22.5 |
| C/T (wt. %/wt. %) | 21.8/0.67 | 21.8/0.67 | 21.8/0.67 | 22.1/0.34 | 22.1/0.34 | 22.1/0.34 | 22.3/0.22 |
| Chlorine (wt. %) | 0.18 | 0.18 | 0.18 | 0.093 | 0.093 | 0.093 | 0.060 |
| Formulation | A | A | A | A | A | A | A |
| Burn Length (in.) mm | (2.0-2.2) 51 - 56 | (2.6-2.7) 66 - 69 | (2.3) 58 | (2.2-3.0) 56 - 76 | (3.0-4.0) 76 - 102 | (4.1) 104 | (2.6) 66 |

| Example | 23 | 24 | 25 | 26 | 27 | 28 | 29 |
|---|---|---|---|---|---|---|---|
| CP | B | B | B | B | B | B | B |
| TP | AA | AA | BB | BB | BB | CC | CC |
| CP/TP (wt. %/wt. %) | 98.9/1.1 | 98.9/1.1 | 83.3/16.7 | 87.5/12.5 | 90/10 | 91.7/8.3 | 95.8/4.2 |
| Total Polymer (wt. %) | 22.5 | 22.5 | 22.1 | 22.2 | 22.3 | 22.7 | 22.6 |
| C/T (wt. %/wt. %) | 22.3/0.22 | 22.3/0.22 | 18.7/3.4 | 19.7/2.5 | 20.3/2.0 | 20.6/2.1 | 21.5/1.1 |
| Chlorine (wt. %) | 0.060 | 0.060 | 0.929 | 0.695 | .556 | .462 | 0.234 |
| Formulation | A | A | A | A | A | A | A |
| Burn Length (in.) mm | (2.7-4.5) 69 - 114 | (5.8) 147 | (1.0) 25 | (2.3) 58 | (2.3) 58 | (1.9) 48 | (2.2) 56 |

TABLE VII

| EXAMPLE | 30 | 31 | 32 | 33 |
|---|---|---|---|---|
| Polyol | III | III | III | III |
| C polymer/polyol (CP) | B | B | B | B |
| Terpolymer/polyol (TP) | DD | EE | FF | GG |
| Polyol/CP/TP (wt. %) | 60.11/21.29/18.6 | 59.42/27.04/13.54 | 60.62/28.4/10.98 | 57.01/25.21/17.18 |
| Total polymer (wt. %) | 11.2 | 11.2 | 11.0 | 11.0 |
| C/T (wt. %) | 5.96/5.24 | 7.57/3.63 | 7.95/3.02 | 7.06/3.81 |
| Chlorine (wt. %) (1) | 0.88 | 0.58 | 0.58 | 0.56 |
| Formulation | B | B | B | B |
| Burn Lengths (in.) mm | (1.2) 30 | (1.4) 36 | (1.2) 30 | (1.1) 28 |
| | (0.9) 23 | (1.0) 25 | (2.6) 66 | (1.1) 28 |
| | (0.8) 20 | (1.0) 25 | (2.7) 69 | (1.2) 30 |

The foregoing tables show that the scatter in the burn lengths of copolymer/polyols with a crosslinking coefficient below about 55 is substantially eliminated by blending a major amount of the copolymer/polyol with a minor amount of a terpolymer/polyol that contains aliphatic chlorine as part of the terpolymer, to produce the copolymer/terpolymer/polyols of this invention.

## Claims

1. A stable polymer/polyol dispersion, which is useful in the preparation of polyurethane foams having improved combustion resistance, comprising:

(a) a polyol having a hydroxyl number from 20 to 150;

(b) a copolymer containing from 0.5 weight percent to 90 weight percent, based on the weight of the copolymer, of polymerized acrylonitrile and from 10 weight percent to 99.5 weight percent, based on the copolymer, of at least one other polymerized halocarbon-free monomer, wherein the copolymer is characterized by a crosslinking coefficient of less than 55; and

(c) a terpolymer containing from 0.5 weight percent to 45 weight percent, based on the terpolymer, of a polymerized halocarbon monomer, from 20 weight percent to 50 weight percent based on the terpolymer, of polymerized acrylonitrile and from 79.5 weight percent to 5% weight percent, based on the terpolymer, of at least one other polymerized ethylenically unsaturated monomer;

wherein the total amount of polyol in the dispersion is from 45 weight percent to 95 weight percent, based on the total weight of the

dispersion, the total amount of copolymer and terpolymer in the polyol is from 5 weight percent to 55 weight percent, based on the total weight of the dispersion, and the weight ratio of copolymer to terpolymer is such that the amount of aliphatic chlorine or bromine is from 0.2 weight percent to 18 weight percent, based on the total weight of the dispersion.

2. The stable polymer/polyol dispersion as claimed in claim 1, wherein the polymerized ethylenically halocarbon-free monomer of the copolymer is polymerized styrene.

3. The stable polymer/polyol dispersion as claimed in claim 1, wherein the polymerized halocarbon monomer of the terpolymer is polymerized vinylidene chloride.

4. The stable polymer/polyol dispersion as claimed in claim 1, wherein the other polymerized unsaturated monomer of the terpolymer and copolymer is polymerized styrene.

5. The stable polymer/polyol dispersion as claimed in claim 1 wherein the copolymer has a crosslinking coefficient of 20 or less.

6. The stable polymer/polyol dispersion as claimed in claim 1 wherein the copolymer has a crosslinking index of about 0.

7. The stable polymer/polyol dispersion as claimed in claim 1 wherein the total concentration

of copolymer and terpolymer range from 10 to 45 weight percent, based on the total weight of the dispersion and the total concentration of polyol ranges from 55 to 90 weight percent, based on the total weight of the dispersion.

8. The stable polymer/polyol dispersion as claimed in claim 1 wherein the total concentration of copolymer and terpolymer range from about 20 to about 40 weight percent based on the weight of the dispersion.

9. The stable polymer/polyol dispersion as claimed in claim 1 wherein the weight ratio of copolymer to terpolymer is such that the amount of chlorine or bromine attached to an aliphatic carbon atom ranges from about 0.5% to about 12% weight percent or from 1.0% to 7% based on the total weight of the dispersion.

10. A method of making a stable polymer/polyol dispersion comprising blending

(a) an amount of copolymer/polyol dispersion which contains a copolymer containing from 0.5 to 90 weight percent, based on the weight of the copolymer, of polymerized acrylonitrile and from 10 to 99.5 weight based on the copolymer, of at least 1 other polymerized halocarbon-free monomer, wherein the copolymer is characterized by a crosslinking coefficient of less than about 55; with

(b) an amount of terpolymer/polyol dispersion which contains a terpolymer containing from 0.5 to 45 weight percent, , of a polymerized halocarbon monomer, from 20 to 50 weight percent

, of polymerized acrylonitrile and from 79.5 to 5 weight percent, based on the terpolymer, of at least one other polymerizable ethylenically unsaturated monomer such that the total amount of polyol in the dispersion is from 45 to 95 weight percent, of the , the total amount of copolymer and terpolymer in the polyol is from 5 percent to 55 weight percent, and the weight ratio of copolymer to terpolymer is such that the amount of aliphatic chlorine or bromine is from 0.2 to 18 weight percent, all based on the total weight of the dispersion.

11. A method for producing a polyurethane foam which has improved combustion resistance which comprises reacting a mixture comprising (a) a stable polymer/polyol dispersion as claimed in claim 1, (b) a polyisocyanate compound, in the presence of (c) a catalyst for the reaction of (a) and (b) and (d) a blowing agent.

12. A polyurethane foam having improved combustion resistance produced by the process claimed in claim 11.

13. A method for producing a polyurethane elastomer by reacting a mixture comprising (a) a stable polymer/polyol dispersion as claimed in claim 1, and (b) a polyisocyanate compound in the presence of (c) a catalyst for the reaction of (a) and (b).

14. A polyurethane elastomer having improved combustion resistance produced by the process claimed in claim 13.

European Patent Office

# EUROPEAN SEARCH REPORT

0158885

Application number

EP 85 10 3715

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 214 055 (C.G. SEEFRIED et al.)<br>--- | | C 08 G 18/63<br>C 08 F 291/08 |
| D,A | US-A-4 242 476 (N.R. SHAH et al.)<br>----- | | |
| | | | TECHNICAL FIELDS SEARCHED (Int. Cl.4) |
| | | | C 08 G<br>C 08 F |

The present search report has been drawn up for all claims

| Place of search | Date of completion of the search | Examiner |
|---|---|---|
| THE HAGUE | 30-07-1985 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82